(19) **Europäisches Patentamt / European Patent Office / Office européen des brevets**

(11) **EP 3 497 747 B1**

(12) **FASCICULE DE BREVET EUROPEEN**

(45) Date de publication et mention de la délivrance du brevet:
**15.05.2024 Bulletin 2024/20**

(21) Numéro de dépôt: **17749487.9**

(22) Date de dépôt: **10.08.2017**

(51) Classification Internationale des Brevets (IPC):
*H01Q 1/28* (2006.01)    *H01Q 3/02* (2006.01)
*G01S 13/88* (2006.01)    *F41G 7/22* (2006.01)
*G01S 13/02* (2006.01)

(52) Classification Coopérative des Brevets (CPC):
**G01S 13/883; F41G 7/2246; F41G 7/2286; H01Q 1/281; H01Q 3/06; H01Q 3/08;** F41G 7/2213; G01S 2013/0245

(86) Numéro de dépôt international:
**PCT/EP2017/070383**

(87) Numéro de publication internationale:
**WO 2018/029321 (15.02.2018 Gazette 2018/07)**

(54) **RADAR À COMMANDE EN SITE-ROULIS POUR LE GUIDAGE AUTONOME D'UNE PLATEFORME ET MISSILE AUTOGUIDÉ COMPRENANT UN TEL RADAR**

SEITENROLLGESTEUERTER RADAR ZUR AUTONOMEN LENKUNG EINER PLATTFORM UND SELBSTLENKENDER FLUGKÖRPER MIT SOLCH EINEM RADAR

SITE-ROLL CONTROLLED RADAR FOR AUTONOMOUSLY GUIDING A PLATFORM AND SELF-GUIDING MISSILE COMPRISING SUCH A RADAR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.08.2016 FR 1601225**

(43) Date de publication de la demande:
**19.06.2019 Bulletin 2019/25**

(73) Titulaire: **Thales**
**92400 Courbevoie (FR)**

(72) Inventeurs:
• MERLET, Thomas
78995 Elancourt Cedex (FR)
• SADDI, Jean-Pierre
78995 Elancourt Cedex (FR)
• CANET, Julien
78995 Elancourt Cedex (FR)
• LESUEUR, Guillaume
78995 Elancourt Cedex (FR)

(74) Mandataire: **Lavoix**
**2, place d'Estienne d'Orves**
**75441 Paris Cedex 09 (FR)**

(56) Documents cités:
EP-A1- 2 445 052    EP-A1- 2 887 455
CA-A1- 2 938 622    US-A- 4 080 579
US-A- 4 562 439    US-A- 4 802 640
US-A1- 2007 228 211

## Description

La présente invention concerne un radar pour un système de guidage autonome d'une plateforme, du type comprenant un bâti, une antenne émettrice-réceptrice pour l'émission d'une onde électromagnétique émise dans une direction de pointage et la réception d'une onde électromagnétique reçue, et un système de pointage pour la modification de l'orientation de la direction de pointage par rapport au bâti, le système de pointage comprenant :

- un dispositif de pivotement primaire pour faire pivoter la direction de pointage par rapport au bâti autour d'un axe primaire, et
- un dispositif de pivotement secondaire pour faire pivoter la direction de pointage par rapport au bâti autour d'un axe secondaire orthogonal à l'axe primaire.

L'invention concerne également un système de guidage autonome d'une plateforme comprenant un radar du type précité, et un missile autoguidé comprenant un tel système de guidage autonome.

Les missiles autoguidés sont connus. Ils comprennent un système de guidage autonome du missile, généralement appelé « autodirecteur », qui comporte un radar adapté pour générer un signal de positionnement d'une cible et un module de pilotage adapté pour déduire un signal de pilotage du missile à partir du signal de positionnement de la cible. Le radar de l'autodirecteur mesure les coordonnées angulaires de la cible et le transmet au module de pilotage du missile qui en déduit la trajectoire à suivre pour intercepter la cible et le signal de pilotage approprié pour que le missile suive ladite trajectoire.

Ill est connu du document US 4 562 439 un missile comprenant un tel radar.

La méthode usuellement connue pour réaliser cette fonction dite de « poursuite angulaire » consiste à asservir le lobe principal du faisceau électromagnétique de l'antenne selon l'axe radar-cible au moyen d'une technique dite 'monopulse'. Selon cette technique classique, la surface de réception de l'antenne est divisée en une pluralité de secteurs, généralement quatre, les signaux reçus par les différents secteurs sont comparés pour déterminer l'écart angulaire entre la direction de la cible et la direction de pointage de l'antenne, et l'antenne est réorientée de manière à annuler l'écart entre la direction de la cible et la direction de pointage de l'antenne.

Le plus souvent, les radars d'autodirecteurs sont monostatiques, c'est-à-dire qu'ils utilisent une même antenne à la fois pour l'émission et la réception de signaux. La réorientation des antennes de tels radars est généralement effectuée au moyen d'un pivotement mécanique de la surface d'émission de l'antenne autour de deux axes orthogonaux à la direction de pointage de l'antenne selon une commande dite « en circulaire élévation ».

Or, les missiles, qui ont généralement un corps cylindrique, sont souvent animés d'un mouvement de roulis, c'est-à-dire de rotation autour de leur axe. Les axes de pivotement de la direction de pointage de l'antenne selon la commande en circulaire élévation n'étant pas parallèles à l'axe du missile, il en résulte une commande complexe pour réorienter la direction de pointage de l'antenne de manière à compenser la rotation du missile autour de son axe.

Pour surmonter ce problème, il a été envisagé par le Demandeur de commander le radar d'un système de guidage autonome de missile au moyen d'une commande dite « en site-roulis ». Selon les principes de cette commande, la direction de pointage de l'antenne peut être pivotée autour de deux axes, un premier axe dit « axe de roulis » coaxial à l'axe du missile, et un deuxième axe dit « axe de site » orthogonal au premier axe et à la direction de pointage. Le pivotement de la direction de pointage autour du premier axe doit nécessairement être réalisé par pivotement mécanique de la surface d'émission autour du premier axe, alors que le pivotement de la direction de pointage autour du deuxième axe peut être réalisé indifféremment par pivotement mécanique de la surface d'émission ou par balayage électronique suivant un plan.

Soit R l'angle de roulis, c'est-à-dire l'angle formé entre une direction attachée à la surface d'émission de l'antenne, orthogonale à l'axe de roulis, et une direction de référence, elle aussi orthogonale à l'axe de roulis, et soit S l'angle de site, c'est-à-dire l'angle entre la direction de pointage de l'antenne et l'axe de roulis. Les consignes en vitesse R et S qui doivent être appliquées respectivement à l'angle de roulis R et à l'angle de site S pour conserver une direction de pointage constante indépendamment des mouvements du missile sont les suivantes :

$$\begin{cases} \dot{S} = -q.\cos(R) - r.\sin(R) \\ \dot{R} = -p + \dfrac{-q.\sin(R) + r.\cos(R)}{\tan(S)} \end{cases}$$

où p est la vitesse de rotation du missile autour de l'axe de roulis, et q et r sont les vitesses de rotation du missile autour respectivement de l'axe de tangage et de l'axe de lacet, lesdits axes de tangage et de lacet étant, de manière connue, orthogonaux à l'axe de roulis et orthogonaux entre eux.

On constate qu'un inconvénient de cette solution consiste en l'existence d'un point singulier à site nul, c'est-à-dire lorsque la direction de pointage est alignée avec l'axe de roulis. En effet, lorsque l'angle de site S tend vers 0, la vitesse de roulis théorique pour compenser les mouvements du missile devient infinie, de sorte qu'il est impossible de suivre les mouvements d'une cible proche de l'axe du missile. Pour cette raison, la commande d'antennes radar selon le principe de site-roulis classique a été exclue d'une application au guidage de missiles.

Il a été développé il y a quelques années des antennes comprenant un positionneur tri-axe permettant le pivotement de la direction de pointage de l'antenne autour d'un axe dit « de cross-élévation » utilisé pour éliminer un point singulier existant dans le pointage de l'antenne. Une telle antenne, destinée à la communication par satellites, est décrite dans EP 2 445 052.

Ces antennes connues ne sont toutefois pas utilisables pour le guidage de missiles. Outre le fait que ce ne sont pas des antennes radar, le pivotement de la direction de pointage de ces antennes est réalisé au moyen de solutions purement mécaniques encombrantes qu'il est impossible de loger dans l'espace très contraint d'un missile. En outre, ces solutions mécaniques sont souvent onéreuses et donc incompatibles avec les exigences de coûts auxquelles elles doivent satisfaire les missiles.

Un objectif de l'invention est ainsi de permettre un pointage continu et précis, en direction d'une cible, de l'antenne radar d'un système de guidage d'une plateforme autoguidée. D'autres objectifs sont de permettre une conservation de la visée de l'antenne radar malgré les mouvements, volontaires ou subits, de la plateforme, et de minimiser le volume occupé par le radar.

A cet effet, l'invention a pour objet un radar selon la revendication 1.

Grâce à la présence du dispositif de pivotement tertiaire, le point singulier qui existait à site nul est éliminé. Il devient ainsi possible de suivre des cibles bien plus proches de l'axe de roulis de l'antenne et donc de réduire la motorisation de l'antenne, ce qui permet un gain de place substantiel. En outre, le fait que le pivotement tertiaire soit obtenu par dépointage électronique, c'est-à-dire par déphasage d'ondes les unes par rapport aux autres, permet un gain de compacité et de fiabilité en s'affranchissant des organes mécaniques qui auraient sinon été nécessaires au pivotement de l'antenne autour de l'axe tertiaire.

Selon des modes de réalisation particuliers de l'invention, le radar est selon l'une quelconque des revendications 2 à 7.

L'invention a également pour objet un système de guidage selon la revendication 8.

L'invention a encore pour objet un missile selon la revendication 9.

Selon un mode de réalisation particulier de l'invention, le missile est selon la revendication 10.

L'invention a également pour objet un procédé selon la revendication 11.

D'autres caractéristiques et avantages de l'invention apparaîtront à la lecture de la description qui va suivre, donnée uniquement à titre d'exemple et faite en se référant aux dessins annexés, dans lesquels :

- la Figure 1 est une vue schématique en élévation d'un missile autoguidé selon l'invention,
- la Figure 2 est un schéma illustratif d'un système de guidage autonome du missile de la Figure 1,
- la Figure 3 est une vue de face d'une surface d'émission d'une antenne du système de guidage autonome de la Figure 1, et
- la Figure 4 est un schéma illustrant une poursuite de cible au moyen du système de guidage de la Figure 2.

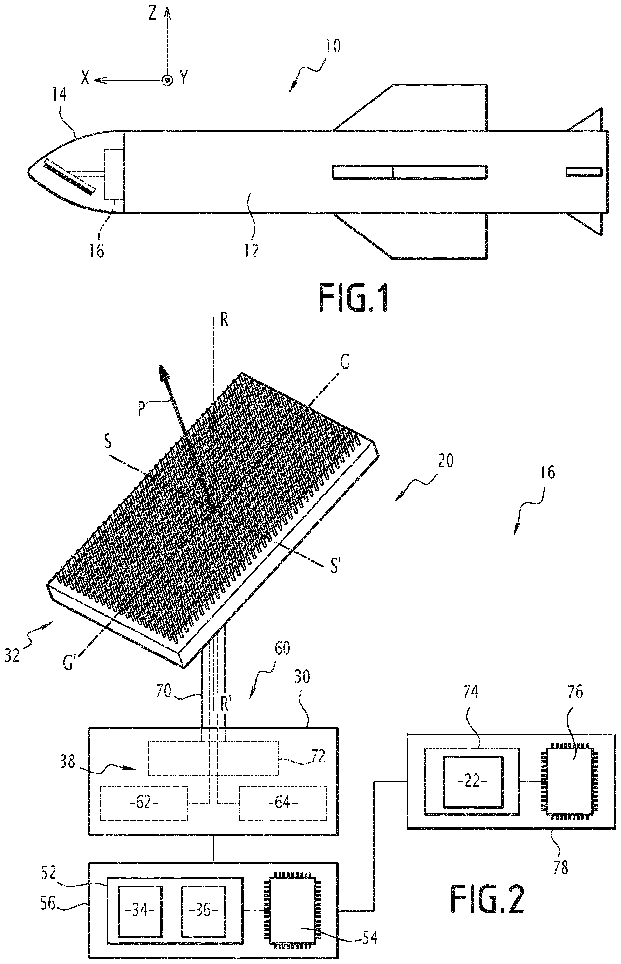

Le missile 10 représenté sur la Figure 1 comprend un corps 12 sensiblement cylindrique allongé suivant un axe longitudinal X, et une coiffe 14 de forme ogivale disposée à une extrémité longitudinale avant du corps 12. On évoquera dans la suite un repère attaché au missile 10 et représenté sur les Figures, dans lequel on distingue :

- l'axe longitudinal X évoqué plus haut, orienté de l'arrière vers l'avant du missile 10, et
- deux axes radiaux Y et Z orthogonaux à l'axe X et orthogonaux entre eux de manière à former un repère orthogonal direct, chacun des axes Y et Z étant orienté de l'intérieur vers l'extérieur du missile 10.

Le missile 10 est un missile autoguidé adapté pour atteindre une cible de manière autonome, sans intervention extérieure. A cet effet, le missile 10 comprend un système de guidage autonome 16.

Le système de guidage autonome 16 est configuré pour repérer une position de la cible par rapport au missile 10 et en déduire des consignes de pilotage du missile 10 adaptées pour conduire le missile 10 à intercepter la cible. A cet effet, le système de guidage autonome 16 comprend, en référence à la Figure 2, un radar 20 et un module de pilotage 22.

Le radar 20 est adapté pour générer un signal de positionnement de la cible. A cet effet, le radar 20 comprend un bâti 30, solidaire du corps 12 du missile 10, une antenne émettrice-réceptrice 32 pour l'émission d'une onde électromagnétique émise dans une direction de pointage P et la réception d'une onde électromagnétique reçue, un écartomètre 34 pour mesurer l'écart angulaire entre la direction de pointage P et la direction de provenance de l'onde électromagnétique reçue, un générateur de signal 36 pour déduire un signal de positionnement de la cible à partie de l'écart angulaire mesuré par l'écartomètre 34, et un système de pointage 38 pour modifier l'orientation de la direction de pointage P par rapport au bâti 30.

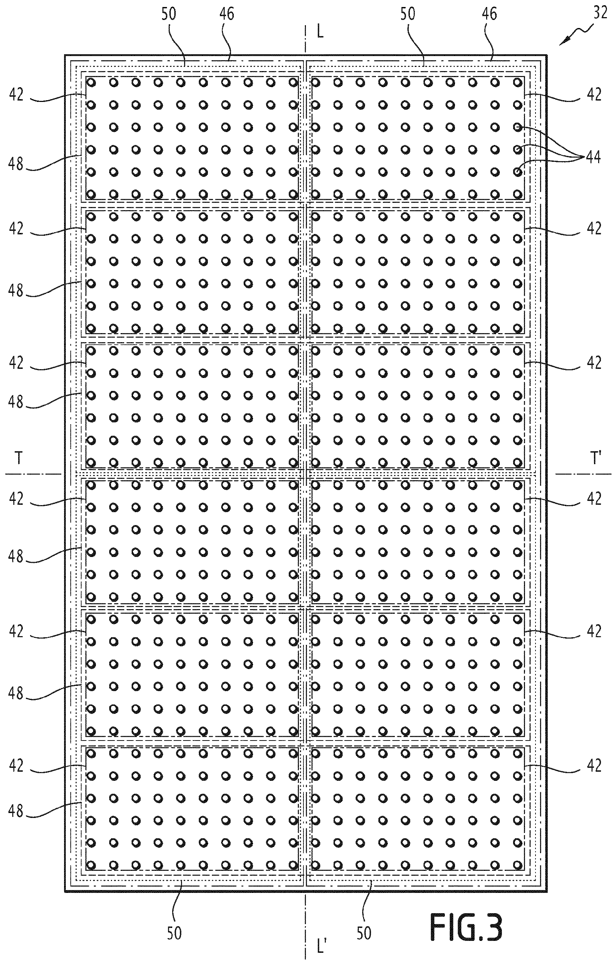

En référence à la Figure 3, l'antenne 32 est constituée par une antenne réseau comprenant une surface d'émission 40 et une pluralité d'antennes élémentaires 42 réparties sur ladite surface d'émission 40.

La surface d'émission 40 est, dans l'exemple représenté, une surface plane ; elle présente alors un plan moyen (non représenté) confondu avec ladite surface d'émission 40. En variante (non représentée), la surface d'émission 40 est convexe, le rayon de convexité moyen étant de préférence supérieur à 5 cm ; le plan moyen de la surface d'émission 40 est alors formé par un plan parallèle au bord de la surface d'émission 40 et sensiblement équidistant dudit bord et du fond de la surface d'émission 40.

L'antenne 32 présente une direction normale à l'antenne (non représentée). Cette direction normale à l'antenne est orthogonale au plan moyen de la surface d'émission 40.

La surface d'émission 40 a, dans l'exemple représenté, une forme sensiblement rectangulaire. Elle est allongée suivant une direction longitudinale L-L' et présente une direction transversale T-T' perpendiculaire à la direction longitudinale L-L'. En variante, la surface d'émission 40 a une forme sensiblement elliptique, la direction longitudinale L-L' étant alors constituée par le demi-grand axe de l'ellipse, et la direction transversale T-T' par le demi-petit axe de l'ellipse. En variante encore, la surface d'émission 40 a une forme sensiblement circulaire, et les directions longitudinale L-L' et transversale T-T' sont alors formées par deux rayons quelconques du cercle, lesdits rayons étant orthogonaux entre eux.

Chaque antenne élémentaire 42 est adaptée pour émettre une onde électromagnétique propre selon une direction normale à la surface d'émission 40. A cet effet, chaque antenne élémentaire 42 est, dans l'exemple représenté, formée par une pluralité d'éléments radiatifs 44 regroupés en une même zone de la surface d'émission 40 et adaptés pour émettre chacun une onde électromagnétique à la même fréquence et avec la même phase que chaque autre élément radiatif 44 de ladite antenne élémentaire 42. En variante, chaque antenne élémentaire 42 est constituée par un unique élément radiatif 44.

Chaque élément radiatif 44 est typiquement constitué par un dipôle adapté pour émettre une onde électromagnétique vers l'extérieur de l'antenne 32 lorsqu'il est excité par un courant électrique. En variante (non représentée), chaque élément radiatif 44 est constitué par une fente formée dans la surface d'émission 40 et reliant la surface d'émission à un guide d'ondes, ledit guide d'ondes reliant ladite fente à un générateur d'ondes électromagnétiques tel qu'un tube hyperfréquence.

Les antennes élémentaires 42 sont disposées de manière matricielle sur la surface d'émission 40, de sorte que chaque antenne élémentaire 42 est alignée avec au moins une autre antenne élémentaire 42 le long d'une direction primaire constituée ici par la direction transversale T-T' et avec au moins une autre antenne élémentaire 42 le long d'une direction secondaire orthogonale à la direction primaire, ladite direction secondaire étant ici constituée par la direction longitudinale L-L'. Chaque antenne élémentaire 42 forme ainsi, avec les autres antennes élémentaires 42 alignées avec elle le long de la direction secondaire L-L', un groupe primaire 46 d'éléments radiatifs 44 et, avec les autres antennes élémentaires 42 alignées avec elle le long de la direction primaire T-T', un groupe secondaire 48 d'éléments radiatifs 44. Les groupes primaires 46 sont ainsi disposés successivement les uns aux autres le long de la direction primaire T-T' et les groupes secondaires 48 sont disposés successivement les uns aux autres le long de la direction secondaire L-L'.

Les groupes primaires 46 sont de préférence en nombre pair et, dans l'exemple représenté, ces groupes primaires 46 sont au nombre de deux.

Chaque groupe primaire 46 est adapté pour émettre une onde primaire formée par l'interférence des ondes électromagnétiques produites par les antennes élémentaires 42 composant ledit groupe primaire 46.

Le nombre de groupes secondaires 48 est de préférence supérieur au nombre de groupes primaires 46. Les groupes secondaires 48 sont avantageusement en nombre pair et au moins deux fois plus nombreux que les groupes primaires 46. Dans l'exemple représenté, les groupes secondaires sont ainsi au nombre de six.

Chaque groupe secondaire 48 est adapté pour émettre une onde secondaire formée par l'interférence des ondes électromagnétiques produites par les antennes élémentaires 42 composant ledit groupe secondaire 48.

L'antenne 32 comprend par ailleurs une pluralité de secteurs 50. Ces secteurs 50 sont en nombre pair. Chaque secteur 50 est adapté pour recevoir une portion de l'onde électromagnétique reçue par l'antenne 32.

A cet effet, chaque secteur 50 comprend au moins une antenne élémentaire 42 propre et chaque antenne élémentaire 42 appartient à un secteur 50. Dans le cas où un secteur 50 comprend plusieurs antennes élémentaires 42, les antennes élémentaires 42 composant ce secteur 50 sont juxtaposées les unes aux autres.

Les secteurs 50 sont de préférence répartis circonférentiellement autour d'un centre de la surface d'émission 40.

Dans l'exemple représenté, l'antenne 32 comprend ainsi quatre secteurs 50 comprenant chacun trois antennes élémentaires 42. Les antennes élémentaires 42 qui appartiennent à un même secteur 50 appartiennent de préférence toutes, comme représenté, à un même groupe primaire 46.

De retour à la Figure 2, l'écartomètre 34 est adapté pour mesurer l'intensité de la portion d'onde reçue par chaque secteur 50 et pour en déduire l'écart angulaire entre la direction de pointage P et la direction de provenance de l'onde électromagnétique reçue par l'antenne 32. A cet effet, l'écartomètre 34 est adapté pour mettre en oeuvre des algorithmes de déduction de l'écart angulaire à partir des intensités des portions d'onde reçues par les différents secteurs 50 qui sont bien connus de l'homme du métier et sont décrits notamment dans l'ouvrage « Physique et théorie du radar » (J. Darricau, 2015, ISBN 978-2-9544675-1-1).

Le générateur de signal 36 est quant à lui configuré pour déduire le signal de positionnement de la cible à partir de l'écart angulaire mesuré par l'écartomètre 34 et transmettre ce signal de positionnement au module de pilotage 22. A cet effet, le générateur de signal 36 est adapté pour mettre en oeuvre des algorithmes qui sont eux aussi bien connus de l'homme du métier. Le générateur de signal 36 est également configuré pour générer un signal de commande du système de pointage 38 apte à modifier de l'orientation de la direction de pointage P par rapport au bâti 30 de manière à annuler l'écart angulaire entre la direction de pointage P et la direction de provenance de l'onde électromagnétique reçue.

Dans l'exemple de réalisation de l'invention, l'écartomètre 34 et le générateur de signal 36 sont réalisés sous forme de logiciels stockés dans une mémoire 52 et aptes à être exécutés par un processeur 54 associé à la mémoire 52, le processeur 54 et la mémoire 52 formant une unité de traitement d'informations 56 incluse dans le radar 20. En variante, l'écartomètre 34 et le générateur de signal 36 sont réalisés au moins partiellement sous forme de composants logiques programmables, ou encore sous forme de circuits intégrés dédiés, inclus dans le radar 20.

Le système de pointage 38 est adapté pour faire pivoter la direction de pointage P par rapport au bâti 30 autour de trois axes non coplanaires. A cet effet, le système de pointage 38 comprend :

- un dispositif de pivotement primaire 60 pour faire pivoter la direction de pointage P par rapport au bâti 30 en roulis autour d'un axe primaire R-R',
- un dispositif de pivotement secondaire 62 pour faire pivoter de la direction de pointage P par rapport au bâti 30 en site autour d'un axe secondaire S-S' orthogonal à l'axe primaire R-R', et
- un dispositif de pivotement tertiaire 64 pour faire pivoter la direction de pointage P par rapport au bâti 30 en gisement autour d'un axe tertiaire G-G' orthogonal à l'axe secondaire S-S'.

L'axe primaire R-R' est sensiblement parallèle et de préférence sensiblement confondu avec l'axe longitudinal X du missile 10.

L'axe secondaire S-S' est sensiblement orthogonal à la direction secondaire L-L' d'alignement des antennes élémentaires 42. L'axe secondaire S-S' est par ailleurs avantageusement sensiblement coplanaire à l'axe primaire R-R', de sorte que les axes primaire R-R' et secondaire S-S' sont sensiblement sécants. L'axe secondaire S-S' est de préférence également sensiblement coplanaire à l'axe tertiaire G-G', de sorte que les axes secondaire S-S' et tertiaire G-G' sont sensiblement sécants.

L'axe tertiaire G-G' est sensiblement orthogonal à la direction primaire T-T' d'alignement des antennes élémentaires 42. Selon une caractéristique avantageuse de l'invention, les axes primaire R-R' et tertiaire G-G' sont eux aussi sensiblement sécants, de préférence de sorte que les axes primaire R-R', secondaire S-S' et tertiaire G-G' soient sensiblement concourants.

En qualifiant deux axes de « sensiblement coplanaires », on comprend que, pour chacun desdits axes, la distance de l'axe au plan parallèle audit axe et passant par l'autre axe est inférieure à 5 cm. Par ailleurs, en qualifiant deux axes de « sensiblement sécants », on comprend que lesdits axes ne sont pas parallèles l'un à l'autre et qu'il existe au moins un point de chaque axe qui est à une distance de l'autre axe inférieure à 5 cm. Enfin, en qualifiant trois axes de « sensiblement concourants », on comprend qu'il existe une sphère de diamètre égal à 5 cm qui est traversée par lesdits trois axes.

Le dispositif de pivotement primaire 60 comprend un support intermédiaire 70 monté mobile en rotation autour de l'axe primaire R-R' par rapport au bâti 30 et un actionneur 72 pour entraîner ledit support intermédiaire 70 en rotation autour de l'axe primaire R-R', l'antenne 32 étant montée sur ce support intermédiaire 70.

De préférence, l'antenne 32 est fixée au support intermédiaire 70, avantageusement de sorte que la direction normale à l'antenne soit, comme représenté, inclinée par rapport à l'axe primaire R-R' d'un angle fixe supérieur ou égal à 10° et inférieur strictement à 90°, en particulier inférieur à 70°. Le dispositif de pivotement secondaire 62 est alors constitué par un module de balayage électronique autour de l'axe secondaire S-S', adapté pour déphaser chaque onde générée par chaque élément radiatif 44 d'un groupe secondaire 48 par rapport à chaque onde générée par chaque élément radiatif 44 de chaque autre groupe secondaire 48 de manière à induire une interférence constructive de ces ondes dans une direction prédéterminée pouvant tourner autour de l'axe secondaire S-S'.

En variante (non représentée), l'antenne 32 est montée mobile en rotation autour de l'axe secondaire S-S' par rapport au support intermédiaire 70. Le dispositif de pivotement secondaire 62 comprend alors un deuxième support intermédiaire monté mobile en rotation autour de l'axe secondaire S-S' par rapport au support intermédiaire 70, l'antenne 32 étant fixée audit deuxième support intermédiaire, et un actionneur pour entraîner ledit deuxième support intermédiaire en rotation autour de l'axe secondaire S-S'. De préférence, le dispositif de pivotement secondaire 62 est alors adapté pour permettre le pivotement de la direction normale à l'antenne autour de l'axe secondaire S-S' entre une première position, dans laquelle la direction normale à l'antenne est sensiblement parallèle à l'axe primaire R-R', et une deuxième position, dans laquelle la direction normale à l'antenne est inclinée par rapport à l'axe primaire R-R' et avantageusement forme un angle supérieur à 30° avec l'axe primaire R-R'.

Enfin, le dispositif de pivotement tertiaire 64 est constitué par un module de balayage électronique autour de l'axe tertiaire G-G', adapté pour déphaser chaque onde générée par chaque élément radiatif 44 d'un groupe primaire 46 par rapport à chaque onde générée par chaque élément radiatif 44 de chaque autre groupe primaire 46, de manière à induire une interférence constructive de ces ondes dans une direction prédéterminée pouvant tourner autour de l'axe tertiaire G-G'.

Cette configuration du système de pointage 38 permet d'annuler le point singulier que l'on rencontre pour les commandes d'antennes en site-roulis classiques, comme on le verra plus loin.

Le module de pilotage 22 est lui adapté pour recevoir le signal de positionnement de la cible déduit par le générateur de signal 36 du radar, et pour en déduire un signal de pilotage du missile 10. Dans l'exemple de réalisation de l'invention, le module de pilotage 22 est réalisé sous la forme d'un logiciel stocké dans une mémoire 74 et apte à être exécuté par un processeur 76 associé à la mémoire 74, le processeur 76 et la mémoire 74 formant une unité de traitement d'informations 78 incluse dans le système de guidage 16. En variante, le module de pilotage 22 est réalisé au moins partiellement sous la forme d'un composant logique programmable, ou encore sous la forme d'un circuit intégré dédié inclus dans le système de guidage 16.

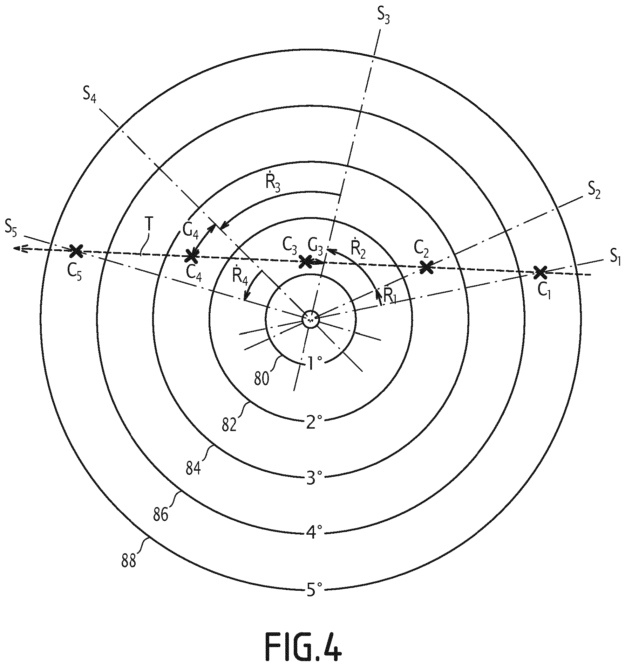

Un procédé de suivi de cible au moyen du radar 20 va maintenant être décrit, en référence à la Figure 4.

La Figure 4 est une représentation de l'espace vu par l'antenne 32 suivant l'axe primaire R-R'. Les cercles concentriques 80, 82, 84, 86, 88 illustrent les différentes régions de l'espace balayables par la direction de pointage P en roulis, c'est-à-dire par pivotement autour de l'axe primaire R-R', pour un angle de balayage en site, formé entre la direction de pointage P et l'axe primaire R-R', fixé respectivement à 1°, 2°, 3°, 4° et 5°. La flèche T représente la trajectoire de la cible, et les points $C_1$, $C_2$, $C_3$, $C_4$ et $C_5$ représentent différentes positions occupées par la cible à cinq instants successifs. A chacun desdits cinq instants, l'antenne 32 présente une orientation en roulis respective, et chaque axe $S_1$, $S_2$, $S_3$, $S_4$ et $S_5$ représente pour chacune desdites orientations en roulis, l'axe de balayage en site associé, c'est-à-dire la région de l'espace balayable par la direction de pointage P par pivotement autour de l'axe secondaire S-S'.

La cible est tout d'abord repérée à une position $C_1$. L'antenne 32 est alors orientée autour de l'axe R-R' de sorte que l'axe de balayage en site occupe une position $S_1$ alignée avec la position $C_1$, et la direction de pointage P est pivotée en site autour de l'axe secondaire S-S' de sorte qu'elle soit orientée vers la position $C_1$. L'angle de balayage en site est alors compris entre 4 et 5°.

La cible est ensuite repérée à la position $C_2$. L'antenne 32 est alors pivotée en roulis autour de l'axe R-R' à une vitesse de rotation $\dot{R}_1$ de sorte que l'axe de balayage en site occupe une position $S_2$ alignée avec la position $C_2$, et la direction de pointage P est pivotée en site autour de l'axe secondaire S-S' de sorte qu'elle soit orientée vers la position $C_2$. L'angle de balayage en site est alors compris entre 2 et 3°.

Puis la cible est repérée à la position $C_3$. L'antenne 32 est alors pivotée en roulis autour de l'axe R-R' à une vitesse de rotation $\dot{R}_2$ de manière à rapprocher l'axe de balayage en site de la position $C_3$. Toutefois, la position $C_3$ est très proche de l'axe R-R', de sorte que la vitesse de rotation $\dot{R}_2$ est insuffisante, du fait des limitations mécaniques de l'actionneur 72, pour permettre un alignement de l'axe de balayage en site avec la position $C_3$. L'axe de balayage occupe alors une position $S_3$ à l'écart de la position $C_3$. La direction de pointage P est alors pivotée en gisement d'un angle $G_3$ autour de l'axe tertiaire G-G' en même temps qu'elle est pivotée en site autour de l'axe secondaire S-S', de manière à compenser l'écart entre les positions $C_3$ et $S_3$ et permettre l'alignement de la direction de pointage P avec la position $C_3$.

La cible est ensuite repérée à une nouvelle position $C_4$. L'antenne 32 est alors à nouveau pivotée en roulis autour de l'axe R-R' à une vitesse de rotation $\dot{R}_3$ de manière à rapprocher l'axe de balayage en site de la position $C_4$, mais encore une fois cette vitesse de rotation $\dot{R}_3$ est insuffisante pour permettre l'alignement de l'axe de balayage en site avec la position $C_4$, de sorte que l'axe de balayage se retrouve encore à occuper une position $S_4$ à l'écart de la position $C_4$ de la cible. La direction de pointage P est alors à nouveau pivotée en gisement autour de l'axe tertiaire G-G', cette fois-ci d'un angle $G_4$, en même temps qu'elle est pivotée en site autour de l'axe secondaire S-S', de manière à compenser l'écart entre les positions $C_4$ et $S_4$ et permettre l'alignement de la direction de pointage P avec la position $C_4$.

La cible est finalement repérée à une dernière position $C_5$. L'antenne 32 est alors pivotée en roulis à une vitesse de rotation $\dot{R}_4$ de manière à rapprocher l'axe de balayage en site de la position $C_5$. La cible s'étant suffisamment écartée de l'axe R-R', la vitesse de rotation $\dot{R}_4$ est cette fois suffisante, en dépit des limitations mécaniques de l'actionneur 72, pour rattraper la cible et permettre l'alignement de l'axe de balayage en site avec la position $C_4$. L'axe de balayage en site occupe ainsi une position $S_5$ alignée avec la position $C_5$, et l'alignement de la direction de pointage P avec la position $C_5$ est effectué simplement par pivotement de la direction P en site autour de l'axe secondaire S-S', sans pivotement cette fois-ci en gisement autour de l'axe tertiaire G-G'.

Comme on le voit ci-dessus, le degré de liberté apporté par le pivotement de la direction de pointage P en gisement autour de l'axe tertiaire G-G' permet de compenser aisément les limitations mécaniques de l'actionneur 72 qui empêchent un alignement du plan de balayage en site avec la position de la cible lorsque la cible est proche de l'axe de roulis R-R'. L'invention permet ainsi un meilleur suivi des cibles. L'invention permet en outre une réduction de la motorisation du système de pointage 38, et donc une réduction de l'encombrement du radar 20.

On notera que le pivotement en gisement autour de l'axe tertiaire G-G' a pour unique fonction de permettre un pivotement de la direction de pointage P sur une amplitude de quelques degrés seulement. Ainsi, alors que la réalisation d'un balayage électronique autour d'un axe nécessite normalement la juxtaposition d'un grand nombre d'antennes élémentaires suivant une direction perpendiculaire à cet axe pour éviter la formation de lobes de réseaux et permettre un balayage de grande amplitude, ce qui produit des antennes présentant un encombrement très important, il est possible dans la présente application de réaliser le balayage électronique en gisement autour de l'axe tertiaire G-G' en juxtaposant l'une à l'autre uniquement deux antennes élémentaires 42 suivant une direction perpendiculaire à cet axe G-G', ce qui permet d'avoir une antenne 32 peu encombrante susceptible d'être logée dans la coiffe d'un missile.

Grâce à l'invention décrite ci-dessus il est ainsi possible de réaliser un pointage continu et précis, en direction d'une cible, de l'antenne radar d'un système de guidage d'un missile autoguidé, tout en conservant la visée de l'antenne radar malgré les mouvements du missile, et en minimisant l'espace occupé par le radar.

On notera que, bien que la description donnée ci-dessus ait été limitée au cas où le système de guidage est embarqué à bord d'un missile autoguidé, l'invention n'est en aucune façon restreinte à ce seul type de plateforme. L'invention s'applique ainsi également à d'autres types de plateformes autoguidées, par exemple des drones, pilotées au moyen du système de guidage 16 décrit ci-dessus.

**Revendications**

1. Radar (20) pour un système (16) de guidage autonome d'une plateforme (10), comprenant un bâti (30), une antenne émettrice-réceptrice (32) pour l'émission d'une onde électromagnétique émise dans une direction de pointage (P) et la réception d'une onde électromagnétique reçue, et un système de pointage (38) pour la modification de l'orientation de la direction de pointage (P) par rapport au bâti (30), le système de pointage (38) comprenant :

   - un dispositif de pivotement primaire (60) pour faire pivoter la direction de pointage (P) par rapport au bâti (30) autour d'un axe primaire (R-R'), et
   - un dispositif de pivotement secondaire (62) pour faire pivoter la direction de pointage (P) par rapport au bâti (30) autour d'un axe secondaire (S-S') orthogonal à l'axe primaire (R-R'),

   **caractérisé en ce que** le système de pointage (38) comprend également un dispositif de pivotement tertiaire (64) pour faire pivoter la direction de pointage (P) par rapport au bâti (30) autour d'un axe tertiaire (G-G') orthogonal à l'axe secondaire (S-S'), et **en ce que** l'antenne (32) est constituée par une antenne réseau comportant une surface d'émission (40) et une pluralité d'éléments radiatifs (44) répartis sur ladite surface d'émission (40), les éléments radiatifs (44) comprenant une pluralité de groupes primaires d'éléments radiatifs (46) disposés successivement les uns aux autres le long d'une direction primaire (T-T') sensiblement orthogonale à l'axe tertiaire (G-G'), chaque groupe primaire (46) comprenant au moins un élément radiatif (44), le dispositif de pivotement tertiaire (64) étant constitué par un module de balayage électronique autour de l'axe tertiaire (G-G') adapté pour déphaser chaque onde générée par le ou chaque élément radiatif (44) d'un groupe primaire (46) par rapport à chaque onde générée par le ou chaque élément radiatif (44) de chaque autre groupe primaire (46), les groupes primaires (46) étant au nombre de deux,
   dans lequel le dispositif de pivotement primaire (60) comprend un support intermédiaire (70) sur lequel l'antenne (32) est montée, ledit support intermédiaire (70) étant monté mobile en rotation autour de l'axe primaire (R-R') par rapport au bâti (30).

2. Radar (20) selon la revendication 1, dans lequel l'antenne (32) présente une direction normale à l'antenne, ladite direction normale à l'antenne étant inclinée par rapport à l'axe primaire (R-R') d'un angle fixe compris entre 10° et 70°.

3. Radar (20) selon la revendication 1 ou 2, dans lequel ladite pluralité d'éléments radiatifs (44) comprend une pluralité de groupes secondaires d'éléments radiatifs (48) disposés successivement les uns aux autres le long d'une direction secondaire (L-L') sensiblement orthogonale à l'axe secondaire (S-S'), chaque groupe secondaire (48) comprenant au moins un élément radiatif (44), et le dispositif de pivotement secondaire (62) est constitué par un module de balayage électronique autour de l'axe secondaire (S-S') adapté pour déphaser chaque onde générée par le ou chaque élément radiatif (44) d'un groupe secondaire (48) par rapport à chaque onde générée par le ou chaque élément radiatif (44) de chaque autre groupe secondaire (48).

4. Radar (20) selon l'une quelconque des revendications précédentes, dans lequel les axes secondaire et tertiaire (S-S', G-G') sont sensiblement coplanaires.

5. Radar (20) selon l'une quelconque des revendications précédentes, dans lequel les axes primaire et secondaire (R-R', S-S') sont sensiblement coplanaires.

6. Radar selon l'une quelconque des revendications précédentes, dans lequel les axes primaire et tertiaire (R-R', G-G') sont sensiblement sécants.

7. Radar selon l'une quelconque des revendications précédentes, dans lequel les axes primaire, secondaire et tertiaire (R-R', S-S', G-G') sont sensiblement concourants.

**8.** Système (16) de guidage autonome d'une plateforme (10) comprenant un radar (20) selon l'une quelconque des revendications précédentes, dans lequel le radar (20) est adapté pour générer un signal de positionnement d'une cible, et le système de guidage comprend un module (22) de pilotage de la plateforme (10) adapté pour déduire un signal de pilotage de la plateforme (10) à partir du signal de positionnement de la cible.

**9.** Missile autoguidé (10) comprenant un corps (12) sensiblement cylindrique et un système (16) de guidage autonome selon la revendication 8, le bâti (30) du radar (20) étant solidaire du corps (12) du missile (10).

**10.** Missile autoguidé (10) selon la revendication 9, dans lequel le corps (12) est centré sur un axe central (X) du missile, ledit axe central (X) étant sensiblement confondu avec l'axe primaire (R-R') de pivotement de la direction de pointage (P).

**11.** Procédé de suivi de cible au moyen d'un radar (20) selon l'une quelconque des revendications 1 à 7, comprenant les étapes successives suivantes :

- fourniture du radar (20), un axe de balayage en site dudit radar (20), constituée par la région de l'espace balayable par la direction de pointage (P) par pivotement autour de l'axe secondaire (S-S'), occupant une première orientation ($S_1$) alignée avec une première position ($C_1$) de la cible et la direction de pointage (P) étant orientée vers ladite première position ($C_1$),
- repérage de la cible en une deuxième position ($C_2$),

**Patentansprüche**

**1.** Radar (20) für ein System (16) zur autonomen Führung einer Plattform (10), umfassend einen Rahmen (30), eine Sende-/Empfangsantenne (32) zum Senden einer elektromagnetischen Welle, die in einer Zielrichtung (P) gesendet wird, und zum Empfangen einer empfangenen elektromagnetischen Welle und ein Zielsystem (38) zum Ändern der Ausrichtung der Zielrichtung (P) in Bezug auf den Rahmen (30), wobei das Zielsystem (38) umfasst:

- eine primäre Schwenkvorrichtung (60) zum Schwenken der Zielrichtung (P) in Bezug auf den Rahmen (30) um eine primäre Achse (R-R'), und
- eine sekundäre Schwenkvorrichtung (62) zum Schwenken der Zielrichtung (P) in Bezug auf den Rahmen (30) um eine sekundäre Achse (S-S'), die orthogonal zur primären Achse (R-R') verläuft,

**dadurch gekennzeichnet, dass** das Zielsystem (38) auch eine tertiäre Schwenkvorrichtung (64) zum Schwenken der Zielrichtung (P) in Bezug auf den Rahmen (30) um eine tertiäre Achse (G-G') orthogonal zu der sekundären Achse (S-S') umfasst, und dass die Antenne (32) aus einer Gruppenantenne mit einer Sendefläche (40) und einer Vielzahl von Strahlungselementen (44) besteht, die über die Sendefläche (40) verteilt sind, wobei die Strahlungselemente (44) eine Vielzahl von primären Gruppen von Strahlungselementen (46) umfassen, die nacheinander entlang einer Primärrichtung (T-T'), die im Wesentlichen orthogonal zur Tertiärachse (G-G') ist, angeordnet sind, wobei jede Primärgruppe (46) mindestens ein Strahlungselement (44) umfasst, wobei die tertiäre Schwenkvorrichtung (64) aus einem Modul zur elektronischen Abtastung um die Tertiärachse (G-G') besteht, das angepasst ist, um jede von dem oder jedem Strahlungselement (44) einer Primärgruppe (46) erzeugte Welle in Bezug auf jede von dem oder jedem Strahlungselement (44) jeder anderen Primärgruppe (46) erzeugte Welle in der Phase zu verschieben, wobei es jeweils zwei Primärgruppen (46) gibt, wobei die primäre Schwenkvorrichtung (60) einen Zwischenträger (70) umfasst, auf dem die Antenne (32) montiert ist, wobei der Zwischenträger (70) drehbar um die primäre Achse (R-R') in Bezug auf den Rahmen (30) montiert ist.

**2.** Radar (20) nach Anspruch 1, wobei die Antenne (32) eine Antennennormalrichtung aufweist, wobei die Antennennormalrichtung in Bezug auf die Primärachse (R-R') um einen festen Winkel zwischen 10° und 70° geneigt ist.

**3.** Radar (20) nach Anspruch 1 oder 2, wobei die Vielzahl von Strahlungselementen (44) eine Vielzahl von sekundären Gruppen von Strahlungselementen (48) umfasst, die aufeinanderfolgend in einer sekundären Richtung (L-L') angeordnet sind, die im Wesentlichen orthogonal zur Sekundärachse (S-S') verläuft, wobei jede sekundäre Gruppe (48) mindestens ein Strahlungselement (44) umfasst, und die sekundäre Schwenkvorrichtung (62) aus einem Modul zur elektronischen Abtastung um die sekundäre Achse (S-S') besteht, das so beschaffen ist, dass es jede Welle, die von dem oder jedem Strahlungselement (44) einer sekundären Gruppe (48) erzeugt wird, in Bezug auf jede Welle, die von dem oder jedem Strahlungselement (44) jeder anderen sekundären Gruppe (48) erzeugt wird, in der Phase verschiebt.

**4.** Radar (20) nach einem der vorhergehenden Ansprüche, wobei die Sekundär- und Tertiärachse (S-S', G-G') im Wesentlichen koplanar sind.

**5.** Radar (20) nach einem der vorhergehenden Ansprüche, wobei die Primär- und die Sekundärachse (R-R', S-S') im Wesentlichen koplanar sind.

**6.** Radar nach einem der vorhergehenden Ansprüche, bei dem die Primär- und Tertiärachse (R-R', G-G') sich im Wesentlichen schneiden.

**7.** Radar nach einem der vorhergehenden Ansprüche, bei dem die Primär-, Sekundär- und Tertiärachse (R-R', S-S', G-G') im Wesentlichen zusammenfallen.

**8.** System (16) zur autonomen Führung einer Plattform (10) mit einem Radar (20) nach einem der vorhergehenden Ansprüche, wobei der Radar (20) so ausgelegt ist, dass er ein Zielpositionierungssignal erzeugt, das die Position des Zielobjekts anzeigt, und das Lenksystem ein Modul (22) zum Steuern der Plattform (10) umfasst, das dazu ausgelegt ist, ein Signal zum Steuern der Plattform (10) aus dem Zielpositionierungssignal abzuleiten.

**9.** Selbstlenkende Rakete (10) mit einem im Wesentlichen zylindrischen Körper (12) und einem System (16) zur autonomen Führung nach Anspruch 8, wobei der Rahmen (30) des Radars (20) fest mit dem Körper (12) der Rakete (10) verbunden ist.

**10.** Selbstlenkende Rakete (10) nach Anspruch 9, bei der der Körper (12) auf einer Mittelachse (X) der Rakete zentriert ist, wobei die Mittelachse (X) im Wesentlichen mit der primären Schwenkachse (R-R') der Zielrichtung (P) zusammenfällt.

**11.** Verfahren zur Zielverfolgung mit Hilfe eines Radars (20) nach einem der Ansprüche 1 bis 7, umfassend die folgenden nacheinander ausgeführten Schritte:

- Lieferung des Radars (20), eine Höhenabtastungsachse des Radars (20), die aus dem Bereich des Raums besteht, der von der Zielrichtung (P) durch Schwenken um die Sekundärachse (S-S') abgetastet werden kann, die eine erste Orientierung ($S_1$) aufweist, die mit einer ersten Position ($C_1$) des Ziels ausgerichtet ist, und wobei die Zielrichtung (P) auf die erste Position ($C_1$) ausgerichtet ist,
- Markierung des Ziels an einer zweiten Stelle ($C_2$),

**Claims**

**1.** A radar (20) for an autonomous guidance system (16) for a platform (10), comprising a frame (30), a transmit-receive antenna (32) for transmitting an electromagnetic wave transmitted in a pointing direction (P) and for receiving a received electromagnetic wave, and a pointing system (38) for changing the orientation of the pointing direction (P) with respect to the frame (30), the pointing system (38) comprising:

- a primary pivoting device (60) for pivoting the pointing direction (P) relative to the frame (30) about a primary axis (R-R'), and
- a secondary pivoting device (62) for pivoting the pointing direction (P) relative to the frame (30) about a secondary axis (S-S') orthogonal to the primary axis (R-R'),
**characterised in that** the pointing system (38) also comprises a tertiary pivoting device (64) for pivoting the pointing direction (P) relative to the frame (30) about a tertiary axis (G-G') orthogonal to the secondary axis (S-S'), and **in that** the antenna (32) consists of an array antenna comprising an emission surface (40) and a plurality of radiating elements (44) distributed over the said emission surface (40), the radiating elements (44) comprising a plurality of primary groups of radiating elements (46) arranged successively with respect to one another along a primary direction (T-T') substantially orthogonal to the tertiary axis (G-G'), each primary group (46) comprising at least one radiating element (44), the tertiary pivoting device (64) consisting of a module for electronic scanning about the tertiary axis (G-G') adapted to phase-shift each wave generated by the or each radiating element (44) of a primary group (46) with respect to each wave generated by the or each radiating element (44) of each other primary group (46), there being two primary groups (46), in which the primary pivoting device (60) comprises an intermediate support (70) on which the antenna (32) is mounted, said intermediate support (70) being mounted so as to be rotatable about the primary axis (R-R') relative to the frame (30).

**2.** A radar (20) according to claim 1, wherein the antenna (32) has a direction normal to the antenna, said direction normal to the antenna being inclined with respect to the primary axis (R-R') by a fixed angle of between 10° and 70°.

**3.** A radar (20) according to claim 1 or 2, wherein said plurality of radiating elements (44) comprises a plurality of secondary groups of radiating elements (48) arranged successively to one another along a secondary direction (L-L') substantially orthogonal to the secondary axis (S-S'), each secondary group (48) comprising at least one radiating element (44), and the secondary pivoting device (62) consists of a module for electronic scanning about the secondary axis (S-S') adapted to phase-shift each wave generated by the or each radiative element (44) of a secondary group (48) with respect to each wave generated by the or each radiative element (44) of each other secondary group (48).

4. A radar (20) according to any of the preceding claims, in which the secondary and tertiary axes (S-S', G-G') are substantially coplanar.

5. A radar (20) according to any of the preceding claims, in which the primary and secondary axes (R-R', S-S') are substantially coplanar.

6. A radar according to any of the preceding claims, in which the primary and tertiary axes (R-R', G-G') are substantially intersecting.

7. A radar according to any of the preceding claims, in which the primary, secondary and tertiary axes (R-R', S-S', G-G') are substantially concurrent.

8. A system (16) for autonomous guidance of a platform (10) comprising a radar (20) according to any one of the preceding claims, wherein the radar (20) is adapted to generate a target positioning signal, and the guidance system comprises a module (22) for steering the platform (10) adapted to deduce a signal for steering the platform (10) from the target positioning signal.

9. A self-guided missile (10) comprising a substantially cylindrical body (12) and an autonomous guidance system (16) according to claim 8, the frame (30) of the radar (20) being integral with the body (12) of the missile (10).

10. A self-guided missile (10) according to claim 9, in which the body (12) is centred on a central axis (X) of the missile, said central axis (X) being substantially coincident with the primary axis (R-R') of pivoting of the pointing direction (P).

11. A method of tracking a target by means of a radar (20) according to any one of claims 1 to 7, comprising the following successive steps:

- supply of the radar (20), an in-situ scanning axis of said radar (20), constituted by the region of space scannable by the pointing direction (P) by pivoting about the secondary axis (S-S'), occupying a first orientation (Si) aligned with a first position ($C_1$) of the target and the pointing direction (P) being oriented towards said first position ($C_1$),

- locating the target in a second position ($C_2$),

FIG.1

FIG.2

FIG.3

FIG.4

## RÉFÉRENCES CITÉES DANS LA DESCRIPTION

**Documents brevets cités dans la description**

- US 4562439 A

- EP 2445052 A

**Littérature non-brevet citée dans la description**

- **J. DARRICAU.** *Physique et théorie du radar,* 2015, ISBN 978-2-9544675-1-1